(19) Europäisches Patentamt / European Patent Office / Office européen des brevets

(11) **EP 4 597 155 A1**

(12) **EUROPEAN PATENT APPLICATION**

(43) Date of publication:
06.08.2025 Bulletin 2025/32

(21) Application number: 25152442.7

(22) Date of filing: **17.01.2025**

(51) International Patent Classification (IPC):
**G01S 7/40** *(2006.01)*    **G01S 13/00** *(2006.01)*
**G01S 7/41** *(2006.01)*

(52) Cooperative Patent Classification (CPC):
**G01S 13/003; G01S 7/40; G01S 7/414;
G01S 13/006**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.01.2024  FI 20245086**

(71) Applicant: **Nokia Solutions and Networks Oy
02610 Espoo (FI)**

(72) Inventors:
• **HENNINGER, Marcus Roland
  Ludwigsburg (DE)**
• **MANDELLI, Silvio
  Ludwigsburg (DE)**
• **GRUDNITSKY, Artjom
  Sachsenheim (DE)**

(74) Representative: **Nokia EPO representatives
Nokia Technologies Oy
Karakaari 7
02610 Espoo (FI)**

(54)    **ENHANCED CLUTTER COMPONENT DETERMINATION**

(57)    Solutions enabling updating clutter components that can be used in clutter removal when joint communication and sensing, for example, are disclosed. To update clutter components by second clutter components, sets of measurement results of sensing of an environment of which clutter components have been determined are obtained (201). Then, per a set, multi-dimensional representations of echo signals received as measurement results of the set are transformed (202) at least partly into one-dimensional echo signals. The second clutter components are determined (203) based at least on corresponding one-dimensional echo signals and a clutter matrix representation that comprises elements obtained from previously determined clutter components of the environment.

FIG.2

**Description**

TECHNICAL FIELD

Various example embodiments relate to communication systems.

BACKGROUND

Communication systems are under constant development. The 5G (fifth generation), 5G-Advanced, and beyond future wireless networks, or network generations, aim to support a large variety of services, use cases and industrial verticals. It is envisaged that there will be use cases that will use joint communication and sensing. The basic idea of joint communication and sensing is that the sensing makes use of reflections of radio signals with a minimum overhead with regard to communication operations. To better sense targets of interest, joint communication and sensing may implement clutter removal. For clutter removal, clutter components caused by entities of no interest should be determined. A solution, which is usable for real-time clutter removal and that takes into account that in practice the clutter environment may change over time, is desired.

SUMMARY

The independent claims define the scope, and different embodiments are defined in dependent claims.

According to an aspect there is provided an apparatus comprising at least one processor and at least one memory storing instructions that, when executed by the at least one processor, cause the apparatus to at least: obtain sets of measurement results of sensing of an environment of which clutter components have been determined; transform, per a set, multi-dimensional representations of echo signals received as measurement results of the set at least partly into one-dimensional echo signals; and determine second clutter components based at least on corresponding one-dimensional echo signals and a clutter matrix representation that comprises elements obtained from previously determined clutter components of the environment.

In embodiments, the elements in the clutter matrix representation are results of a multiplication of the previously determined clutter components of the environment with their singular values.

In embodiments, the at least one processor and the at least one memory storing instructions, when executed by the at least one processor, further cause the apparatus at least to: update the previously determined clutter components of the environment to comprise the second clutter components.

In embodiments, the at least one processor and the at least one memory storing instructions, when executed by the at least one processor, further cause the apparatus at least to determine the second clutter components by stacking the one-dimensional echo signals of the sets to form a sensing matrix; stacking the sensing matrix with the clutter matrix representation to form a clutter matrix; and determining the second clutter components based on the clutter matrix.

In embodiments, the at least one processor and the at least one memory storing instructions, when executed by the at least one processor, further cause the apparatus at least to multiply, prior to stacking the sensing matrix with the clutter matrix representation, the sensing matrix with a scaling factor; and use a result of the multiplication in the stacking.

In embodiments, the at least one processor and the at least one memory storing instructions, when executed by the at least one processor, further cause the apparatus at least to: determine, prior to stacking, a first smoothing value whose value is at most one and not less than zero and a second smoothing value whose value is at most one and not less than zero, wherein when one of the smoothing values is zero, the other one is one; multiply the sensing matrix with the first smoothing value and the clutter matrix representation with the second smoothing value; and use results of the multiplication in the stacking.

In embodiments, the at least one processor and the at least one memory storing instructions, when executed by the at least one processor, further cause the apparatus at least to perform a singular value decomposition to the clutter matrix to obtain singular values of the clutter matrix.

In embodiments, the at least one processor and the at least one memory storing instructions, when executed by the at least one processor, further cause the apparatus at least to determine the second clutter components by: determining a decision threshold based on the singular values of the clutter matrix; and determining that at least an element whose value exceeds the decision threshold is a second clutter component.

In embodiments, the at least one processor and the at least one memory storing instructions, when executed by the at least one processor, further cause the apparatus at least to: determine an upper bound for the singular values of the clutter matrix to be the decision threshold.

In embodiments, the at least one processor and the at least one memory storing instructions, when executed by the at least one processor, further cause the apparatus at least to: multiply an upper bound for the singular values of the clutter matrix by a predetermined threshold factor; and determine a result of the multiplication to be the decision threshold.

In embodiments, the at least one processor and the at least one memory storing instructions, when executed by the at least one processor, further cause the apparatus at least to: determine the second clutter components periodically and/or when an event indicating a request for the second clutter components is detected.

In embodiments, the at least one processor and the at least one memory storing instructions, when executed by the at least one processor, further cause the apparatus at least to: perform clutter removal by removing, per a one-dimensional echo signal, a projection of the one-dimensional echo signal over the second clutter components.

In embodiments the at least one processor and the at least one memory storing instructions, when executed by the at least one processor, further cause the apparatus at least to: determine, using at least the second clutter components, at least one clutter calibration matrix; determine one-dimensional clutter contributing signals based on the one-dimensional echo signals, by applying, per a one-dimensional echo signal, a projection of one of the at least one clutter calibration matrix to obtain a corresponding one-dimensional clutter contributing signal; and remove clutter from the multi-dimensional representations of echo signals using the one-dimensional clutter contributing signals.

According to an aspect there is provided a method for an apparatus, the method comprising at least: obtaining sets of measurement results of sensing of an environment of which clutter components have been determined; transforming, per a set, multi-dimensional representations of echo signals received as measurement results of the set at least partly into one-dimensional echo signals; and determining second clutter components based at least on corresponding one-dimensional echo signals and a clutter matrix representation that comprises elements obtained from previously determined clutter components of the environment.

According to an aspect there is provided a computer readable medium comprising instructions which, when executed by an apparatus, cause the apparatus to perform at least: obtaining sets of measurement results of sensing of an environment of which clutter components have been determined; transforming, per a set, multi-dimensional representations of echo signals received as measurement results of the set at least partly into one-dimensional echo signals; and determining second clutter components based at least on corresponding one-dimensional echo signals and a clutter matrix representation that comprises elements obtained from previously determined clutter components of the environment.

According to an aspect there is provided a a non-transitory computer readable medium comprising instructions which, when executed by an apparatus, cause the apparatus to perform at least: obtaining sets of measurement results of sensing of an environment of which clutter components have been determined; transforming, per a set, multi-dimensional representations of echo signals received as measurement results of the set at least partly into one-dimensional echo signals; and determining second clutter components based at least on corresponding one-dimensional echo signals and a clutter matrix representation that comprises elements obtained from previously determined clutter components of the environment.

According to an aspect there is provided a computer program comprising instructions, which, when executed by an apparatus, cause the apparatus to perform at least: obtaining sets of measurement results of sensing of an environment of which clutter components have been determined; transforming, per a set, multi-dimensional representations of echo signals received as measurement results of the set at least partly into one-dimensional echo signals; and determining second clutter components based at least on corresponding one-dimensional echo signals and a clutter matrix representation that comprises elements obtained from previously determined clutter components of the environment.

BRIEF DESCRIPTION OF DRAWINGS

Embodiments are described below, by way of example only, with reference to the accompanying drawings, in which

Fig. 1 illustrates an exemplified high-level network architecture;
Fig. 2 illustrates an example functionality;
Fig. 3 illustrates an example functionality;
Fig. 4 illustrates an example functionality;
Fig. 5 illustrates an example functionality;
Fig. 6 is a schematic block diagram; and
Fig. 7 is a schematic block diagram.

DETAILED DESCRIPTION OF SOME EMBODIMENTS

The following embodiments are only presented as examples. Although the specification may refer to "an", "one", or "some" embodiment(s) and/or example(s) in several locations, this does not necessarily mean that each such reference is to the same embodiment(s) or example(s), or that a particular feature only applies to a single embodiment and/or single example. Single features of different embodiments and/or examples may also be combined to provide other embodiments and/or examples. Furthermore, words "comprising" and "including" should be understood as not limiting the described embodiments to consist of only those features that have been mentioned and such embodiments may contain also features/structures that have not been specifically mentioned. Further, although terms including ordinal numbers, such as "first", "second", etc., may be used for describing various elements, the elements are not restricted by the terms. The terms are used merely for the purpose of distinguishing an element from other elements. For example, second clutter components could be termed clutter components or newest clutter components, or the most recently determined clutter components, or first clutter components, and correspondingly previously determined clutter components could be termed first clutter components or second clutter components, or earlier determined clutter components, etc. without departing from the scope of the present disclosure.

5G-Advanced, and beyond future wireless networks aim to support a large variety of services, use cases and industrial verticals, for example unmanned mobility with fully autonomous connected vehicles, other vehicle-to-everything (V2X) services, or smart environment, e.g. smart industry, smart power grid, or smart city, just to name few examples. To provide variety of services with different requirements, such as enhanced mobile broadband, ultra-reliable low latency communication, massive machine type communication, wireless networks are envisaged to adopt network slicing, flexible decentralized and/or distributed computing systems and ubiquitous computing, with local spectrum licensing, spectrum sharing, infrastructure sharing, and intelligent automated management underpinned by mobile edge computing, artificial intelligence, for example machine learning, based tools, cloudification and blockchain technologies. For example, in the network slicing multiple independent and dedicated network slice instances may be created within the same infrastructure to run services that have different requirements on latency, reliability, throughput and mobility. In addition to the above listed features, 6G (sixth generation) networks are expected to adopt short-packet communication, for example. Key features of 6G will include intelligent connected management and control functions, programmability, integrated sensing and communication, reduction of energy footprint, trustworthy infrastructure, scalability and affordability.

Various techniques described herein may also be applied to a cyber-physical system (CPS) (a system of collaborating computational elements controlling physical entities). CPS may enable the implementation and exploitation of massive amounts of interconnected ICT devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

It is envisaged that artificial intelligence, AI/machine learning, ML, based models will be used to improve performance of at least some air-interface functions, providing an AI/ML-enabled radio interface, for example.

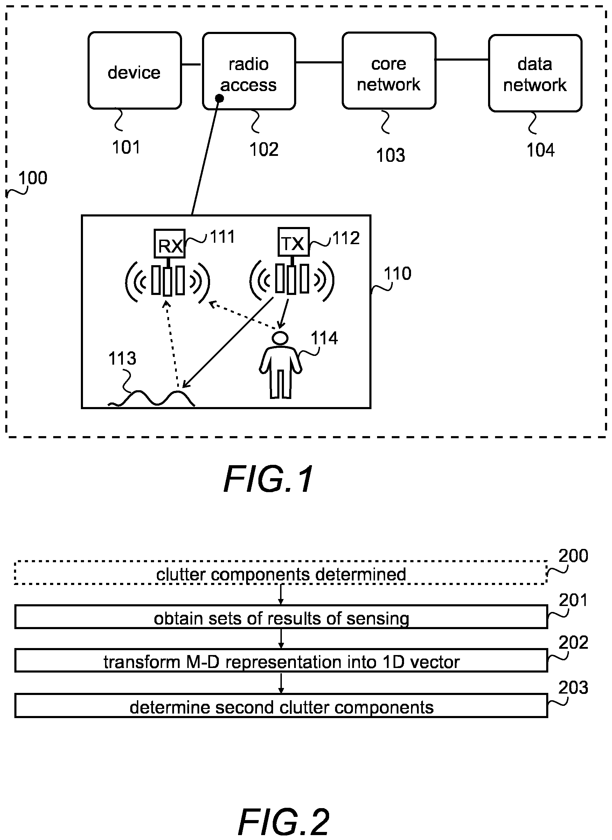

Fig. 1 illustrates an exemplified high-level network architecture of a communication system with a highly simplified sensing arrangement, only showing some details, the more detailed implementation being irrelevant for the description of examples. The examples are described herein using principles and terminology of 5G-Advanced, without limiting the examples, and the terminology used, to said 5G-Advanced. A person skilled in the art may apply the solutions and examples to other communication systems, for example beyond 5G-Advanced, including 6G and 7G, or communication system implementing similar principles and functionalities, possibly with different terms having corresponding meaning, but using some other than 5G technology.

In the non-limiting example of Fig. 1, software-based components of the system 100 comprise device components 101 for device functionalities in device domain, radio access network components 102 for access network functionalities in a radio access network domain, core network components 103 for core network functionalities in core network domain, and data network components 104 for data network functionalities in data network domain. Components (elements, functional units) of service-based architecture may be implemented as applications, defined using network functions that may be cloud-native network functions, for example virtualized network functions or container network functions.

A device component 101 may be any electrical device or apparatus connectable to an access network, and configurable to be in a wireless connection on one or more communication channels with an access network component 102. The physical link from the device component 101 to the access network component 102 towards a core network component 103 is called an uplink or a reverse link and the physical link to the device component is called a downlink or a forward link. By way of example rather than limitation, the device component 101 may be referred to as a served apparatus, a downlink apparatus, a mobile apparatus, a terminal device, a communication device, a user equipment (UE), a subscriber station (SS), a portable subscriber station, a mobile station (MS), or an access terminal (AT). A non-limiting list of examples of the device component 101, or what the device component 101 may comprise or be comprised in, includes a smart phone, a multimedia device, a drone, a vehicle, a vehicle-mounted wireless terminal device, an Internet of things device, an industrial Internet of things device, a mobile robot, a sensor, on-person device, like wearable device, just to mention a few non-limiting examples. The device component may also be part of a group of device components seen as one device component, i.e. one mobile apparatus, by the wireless network.

The radio access network domain may be a 5G-Advanced access network, an open radio access network, a cloud radio access network, a legacy cellular radio access network, a non-terrestrial network, or a non-cellular access network, for example a wireless local area network, comprising entities implementing radio sensing. In other words, the radio access network domain may use any radio interface technology that enables sensing according to embodiments and examples described herein. To provide the wireless access, the radio access network comprises access network components 102, such as access network apparatuses, or access devices, which may provide one or more cells. There are a wide variety of access devices. A non-limiting list of examples of the access network component 102, or what the access network component 102 may comprise or be comprised in, includes different types of base stations, such as eNBs, gNBs, split gNBs, transmission-reception points, network-controlled repeaters, donor nodes in integrated access and backhaul (IAB), fixed IAB nodes, mobile IAB nodes mounted on vehicles, nodes operationally coupled to one or more remote radio heads, base stations comprising radio parts, etc. The access devices provide wireless connections for communication by transmitting and receiving radio signals via antenna units that may comprise a plurality of antennas or antenna elements, for example for multiple-input, multiple-output (MIMO) technology. The access nodes may be configured to transmit radio signals over beams, and for beam management to perform beam sweeping. The beam sweeping is a technique to transmit beams in different directions in a burst. For sensing purposes, radio signals for sensing may be transmitted in a similar manner.

The core network components 103 form one or more core networks. A core network may be based on a non-standalone core network, for example an LTE-based network, or a standalone access network, for example a 5G core network. However, it should be appreciated that the core network, and the core network components 103, may use any technology that enables network services to be delivered between devices and data networks.

The data network, or the data network domain 104, may be any network, like the Internet, an intranet, a wide area network, etc. Different remote monitoring and/or data collection services for different use cases may be reached via the data network and the data network components 104.

Further, it should be noted that some of the components may be multi-domain components. For example, a device component 101 may also provide services to other device components, i.e. operate also as an access network component 102, for example be a relay node, or a mobile IAB node, or a mobile termination part in an IAB node.

The highly simplified example of the sensing arrangement comprises an environment 110 in which sensing according to embodiments and examples may be performed. The environment 110 may be any environment, for example a room or a corridor but it may be also an outdoor environment. In the illustrated example, the sensing arrangement comprises a receiver (RX) 111 and a transmitter (TX) 112 that are co-located. However, it should be appreciated that the sensing arrangement may as well be a bi-static arrangement, in which the receiver and the transmitter are not co-located or multi-static arrangements with at least one transmitter 112 and multiple receivers 111, which all, or some of them, may be configured to perform the below described processes. The transmitter and the receiver may be different entities, e.g. different nodes in a radio access network, or different antenna panels in one entity, the antenna panels not sharing a local oscillator, which may cause phase incoherencies between them.

When, during a sensing occurrence, the transmitter 112 transmits one or more sensing signals, depicted by solid line arrows in Fig. 1, the receiver 111 receives echo signals, depicted by dash line arrows in Fig. 1. When orthogonal frequency division multiplexing (OFDM) sensing technology (radar technology) is applied, symbols transmitted by the transmitter 112 in a sensing signal may be known at the receiver 111, so that the receiver may obtain a channel via element-wise division. The echo signals are reflections of the sensing signals, reflecting from objects 113, 114 in the environment. In the illustrated example one of the objects is a clutter entity, i.e. an object 113 of no interest for the sensing use case, and thereby causing unwanted reflections. For example, the clutter entity 113 may be a curtain causing clutter 113, which, if not removed, makes detection and tracking of objects of interest, for example humans 114, or other slowly moving, or even static objects, more difficult. The clutter can be removed using e.g. the solution disclosed in a publication by M. Henninger, S. Mandelli, A. Grudnitsky, T. Wild, S. ten Brink, "CRAP: Clutter Removal with Acquisitions Under Phase Noise", publicly available on ArXiV from June 2023, which publication is incorporated fully by reference herein. In the disclosed solution, reference sensing of the environment is performed in a target-free environment 110, i.e. without the object of the interest 114, to obtain (acquire) constant clutter, so that clutter can be removed when sensing objects of interest. The solution is utilizing vectorization of the channel acquired in a radio frame in a high-dimensional space. In an offline clutter acquisition step, singular value decomposition is used to determine the major clutter components. At runtime, the clutter is then estimated and removed by a subspace projection of the acquired radio frame onto the clutter components. Finnish patent application number 20237037, filed on 24 February 2023 and titled "Clutter removal", which is assigned to the same applicant and which disclosure is incorporated fully by reference herein, discloses solutions similar to the solution in the publication "CRAP: Clutter Removal with Acquisitions Under Phase Noise". In the Finnish patent application number 20237037 one or more clutter calibration matrices are determined from a calibration matrix, which is obtained using reference sensing of the environment. One clutter calibration matrix, or any equivalent decomposition of the calibration matrix, is then used in clutter removal.

It may be that a target of interest is a quasi/semi-static target, or there is a change in objects of no interest in the environment. A quasi/semi-static sensing target (target of interest) is an entity/object that exhibits the same properties (e.g., same range, no movement, i.e. speed = 0) over a long time. Such a target may be less relevant for new sensing measurements. Hence echo signals from such a target may be considered as interference to the sensing signal and should be removed as if they were clutter.

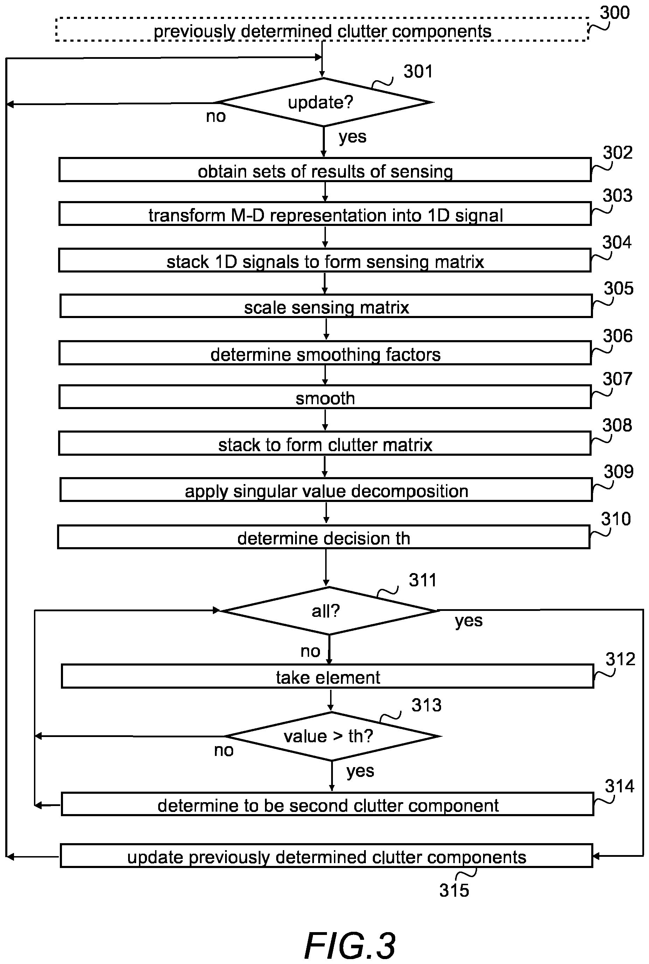

Fig. 2 and Fig. 3 illustrate processes to track clutter history in a computationally lightweight manner, which enables implementations in real time sensing and clutter removal. The processes depicted by means of Fig. 2 and Fig. 3 enable continuous and dynamic updating of clutter components of an environment based on earlier determined clutter components of the environment and measurement results of sensing of the environment. **In** other words, the processes enable a continuous and dynamic acquisition of multi-dimensional measurements, for example channel state information, CSI, matrix measurements, and allow tracking and updating the most meaningful (semi-)constant subspaces of a multi-dimensional matrix, for example a multi-dimensional CSI matrix, in an efficient manner. The most meaningful (semi-)constant subspaces of a multi-dimensional matrix represent herein, for the sake of clarity, clutter components that impede the sensing procedures. However, it should be appreciated that the disclosed processes may be applied also when the subspaces of a multi-dimensional matrix have other (physical) interpretations.

Herein two similar quantities are used for describing clutter, the quantities being a signal space and a clutter subspace. The signal space is an N-dimensional space where a signal, e.g. an echo signal or the sensing signal, may be expressed as an one-dimensional vector. The clutter subspace is a collection of one or more vectors in the signal space, describing estimated directions/dimensions of the clutter. A clutter matrix representation is a representation that contains information about the clutter subspace and the relevance/scaling of each single vector contained within. In other words, the clutter matrix representation contains elements obtained from previously determined clutter components, as will be described in more detail below. The clutter matrix representation may be given by a product of the clutter subspace with a diagonal matrix containing corresponding singular values. The clutter matrix representation may be expressed as a single matrix or an equivalent multiplication of multiple matrices. The latter may be a technically relevant implementation, since storing multiple matrices may be easier, or result in operations that are simpler to execute at clutter removal runtime computations.

The processes depicted in Fig. 2 and Fig. 3 may use earlier obtained (acquired) sets (acquisitions) of measurement results of sensing of the environment or use newly obtained sets, or both. Measurement results of sensing may be called sensing results. Further, the processes may be run by a separate entity, which does not perform sensing, but obtains the sets from a sensing apparatus. The sets may be obtained by performing the sensing multiple times, for example 50, 80, 100 or 150 times. Since the processes depicted in Fig. 2 and Fig. 3 are update processes, it is assumed that there exist previously determined clutter components (block 200 in Fig. 2 and block 300 in Fig. 3). The previously determined clutter components may be determined as described in the above referred publication "CRAP: Clutter Removal with Acquisitions Under Phase Noise" or in the Finnish patent application number 20237037. In some implementations, clutter components correspond to a clutter subspace, disclosed in the Finnish patent application number 20237037.

Referring to Fig. 2, it is assumed that clutter components of an environment have been determined (block 200). The process of Fig. 2 starts by obtaining (block 201) sets (acquisitions) of measurement results of sensing of said environment. For example, K sets may be obtained. It should be appreciated that already acquired measurements (e.g., CSI measurements from nominal sensing operations) can be used, and it may be that there is no need to obtain additional sets. In such a case, the obtaining in block 201 does not involve additional measurement overhead.

Then, per a set, multi-dimensional (M-D) representations of echo signals received as measurement results of the set are transformed (block 202) at least partly into one-dimensional echo signals. In other words, the measurement results of sensing, or a subset of measurement results in the set, are vectorized by collapsing all dimensions into one-dimension. For example, a two-dimensional time-frequency representation of an echo signal, for example, a following OFDM echo signal with $N$ subcarriers and M symbols (radio frames with $N$ subcarriers and M symbols)

$$\begin{bmatrix} h_{1,1} & \cdots & h_{1,M} \\ \vdots & \ddots & \vdots \\ h_{N,1} & \cdots & h_{N,M} \end{bmatrix}$$

may be transformed into the following one-dimensional row vector of length $Q = NM$:

$$[h_{1,1} \ldots h_{1,M} \ldots h_{N,1} \ldots . h_{N,M}]$$

In other words, a set (acquisition) of multi-dimensional (M-D) representations of an echo signal is transformed to a vectorized acquisition with $Q = NM$ samples.

When K sets are obtained, the above described vectorizing (block 202) is performed K times, resulting in K one-dimensional row vectors (vectorized acquisitions).

It should be appreciated that the one-dimensional vector may also be a column vector. However, herein, for the clarity of the description, the examples use the row vector. Applying the principles disclosed to column vectors is a straightforward task for one skilled in the art.

When multi-dimensional (M-D) representations of echo signals of the sets have been transformed into K one-dimensional echo signals (row vectors), second clutter components are determined (block 203) based at least on corresponding one-dimensional echo signals (K one-dimensional row vectors) and a clutter matrix representation. The clutter matrix representation comprises elements obtained from previously determined clutter components of the environment. Hence, the history information of the clutter will be tracked by piggybacking the history information to be part of the newest, i.e. second, clutter components. The previously determined clutter components may be the most recently determined clutter components, i.e. determined during the preceding time the process of Fig. 2 was performed, or they may be a collection of e.g. 3 (or any other number) preceding rounds. Naturally, when the process is performed for the first time, the clutter components are those determined using for example the reference measurements as disclosed in the publication "CRAP: Clutter Removal with Acquisitions Under Phase Noise" or in the Finnish patent application number 20237037.

The elements in the clutter matrix representation may be the previously determined clutter components, or the elements may be results of a multiplication of the previously determined clutter components of the environment with their singular values. The singular values may have been determined using a singular value decomposition, SVD, when the previously determined clutter components of the environment were determined.

The second clutter components are preferably meaningful clutter components. Hence, the determining in block 203 may include selecting the second clutter components based on one or more rules. For example, as described in the Finnish patent application number 20237037, a model estimation technique, for example minimum description length (MDL), may be used to select (determine) the second clutter components, which may be $L$ vectors associated with the $L$ strongest clutter components. Further examples of rules that may be used in block 203 to determine meaningful clutter components are illustrated below with Fig. 3

Referring to Fig. 3, it is assumed that clutter components of an environment have been determined (block 300), for example as described above.

For example, during nominal sensing operations it is monitored (block 301), whether the previously determined clutter components are to be updated, i.e. whether the second clutter components are to be determined. The second clutter components may be determined periodically and/or aperiodically, i.e. when an event indicating a request for the second clutter components is detected. The periodical updates take place at fixed intervals, for example every hour, every day, etc. An event may take place when a system operator (human) triggers an update based on an assessment of the sensing environment, e.g., in case significant changes are observed that necessitate an update, or if the environment is known to only contain clutter components, making it suitable for an update. Further, a degradation in sensing key performance indicators or an analysis of the temporal behavior of the channel may provide hints about whether the environment has changed or whether the environment is empty. In both cases, a clutter update may be useful, and hence triggered, either by the system operator, or automatically by the system, for example by a system monitoring at least one of the key performance indicators or performing said analysis.

When the previously determined clutter components are to be updated (block 301: yes), sets of measurement results of sensing of the environment of which clutter components have been determined, are obtained (block 302) in a similar way as described above with block 201, not repeated in vain herein.

Then, per a set, multi-dimensional representations of echo signals received as measurement results of the set are transformed (block 303) at least partly into one-dimensional echo signals, in a similar way as described above with block 202, not repeated in vain herein.

In the example of Fig. 3, the one-dimensional echo signals of the sets are stacked (block 304) along the same dimension to form a sensing matrix, denoted by $S_t$. (Subscript t means index of the current update. It may be a time index, for example.) The term sensing matrix implies the fact that - even though not desirable - the sensing matrix may comprise also non-clutter components, in addition to clutter components. As said earlier, for forming (constructing) the sensing matrix $\mathbf{S}_t$ already acquired measurements (e.g., CSI measurements from nominal sensing operations) may be used, i.e., it does not necessarily involve additional measurement overhead.

Stacking $K$ such vectorized acquisitions with $Q = NM$ samples, for example radio frames with $N$ subcarriers and M symbols, yields the $K \times Q$ sensing matrix S , which is illustrated below. Each row corresponds to a vectorized acquisition, i.e. to a one-dimensional echo signal.

$$\mathbf{S} = \begin{bmatrix} S_{1,1} & S_{1,2} & \cdots & S_{1,Q} \\ & \vdots & \ddots & \vdots \\ S_{K,1} & S_{K,2} & \cdots & S_{K,Q} \end{bmatrix}$$

In the example of Fig. 3, the thus formed sensing matrix is scaled (block 305). In other words, the sensing matrix is multiplied with a scaling factor. The scaling factor may be an arbitrary scaling factor, or a result of scaling factors. For example, to ensure that a power relationship between updates in case of varying numbers of acquisitions, e.g., $K_t \neq K_{t-1}$, is preserved such that singular values (and in the example of Fig. 3 also eigenvalues) are coherent. This may be achieved by normalizing the sensing matrix via multiplication by $\sqrt{K_t}^{-1}$. The sensing matrix may be scaled further by multiplication with $\sqrt{Q}^{-1}$. It should be appreciated that scaling the sensing matrix may be omitted in some implementations.

In the example of Fig. 3, one or more smoothing values are determined (block 306), and the sensing matrix (which may be a scaled sensing matrix) and/or the clutter matrix representation may be smoothed (block 307) by multiplying it or them with a corresponding smoothing value. For example, a first smoothing value whose value is at most one and not less than zero and a second smoothing value whose value is at most one and not less than zero may be determined, wherein when one of the smoothing values is zero, the other one is one, and the sensing matrix may be multiplied with the first smoothing value and the clutter matrix representation may be multiplied with the second smoothing value.

The first smoothing value determines how much weight is given to the new measurements forming the sensing matrix $\mathbf{S}_t$ and the second smoothing value how much weight is given to the previous clutter components, depicted by a clutter subspace $\hat{\mathbf{C}}'_{t-1}$. In the below examples, the first smoothing value is assumed to be a value for a smoothing factor $\alpha_t$, $0 \leq \alpha_t \leq 1$, and the second smoothing value is assumed to be a value which is an exponential value of the value of the factor $\alpha_t$, e.g. $\sqrt{1 - \alpha_t^2}$. The higher the value of $\alpha_t$ the more weight is given to the new measurements, i.e., the less is smoothed. Clearly, if $\alpha_t = 1$, $\mathbf{C}'_t$ corresponds to $\sqrt{K_t Q}^{-1} \mathbf{S}_t$, whereas with $\alpha_t = 0$ the new measurements are not considered at all, i.e., $\mathbf{C}'_t = \left( \hat{\mathbf{C}}'_{t-1} \hat{\mathbf{\Sigma}}'_{t-1} \right)^{\mathrm{T}}$.

For aperiodic updates, a value of the smoothing factor $\alpha_t$ may also be determined based on the time between clutter updates; for example, using equation (1):

$$\alpha_t = 1 - e^{-\frac{\Delta T_t}{\tau}} \qquad (1)$$

wherein $\Delta T_t$ is the elapsed time since the previous update at update index t-1 and the current update index $t$, $\tau$ is a time constant of an exponential moving average (a hyperparameter). Thus, the more time elapses between updates, the more weight is given to the sensing matrix (new measurements) $S_t$.

It should be appreciated that smoothing the sensing matrix and/or smoothing the clutter matrix representation may be omitted in some implementations.

Then the sensing matrix (scaled and smoothed, or scaled, or smoothed, or none of the options) is stacked (block 308) with the clutter matrix representation to form a clutter matrix.

For example, the current sensing matrix $\mathbf{S}_t$ may be stacked (merged) with the clutter subspace from the previous iteration $\hat{\mathbf{C}}'_{t-1}$, allowing to update the clutter components in a computationally efficient manner. A smoothed clutter matrix at update index t may be defined as

$$\mathbf{C}'_t = \begin{cases} \sqrt{K_t Q}^{-1} \mathbf{S}_t & t = 0 \\ \begin{bmatrix} \alpha_t \cdot \sqrt{K_t Q}^{-1} \mathbf{S}_t \\ \sqrt{1 - \alpha_t^2} \left( \hat{\mathbf{C}}'_{t-1} \hat{\mathbf{\Sigma}}'_{t-1} \right)^{\mathrm{T}} \end{bmatrix} & t > 0 \end{cases} \qquad (2)$$

which "merges" the current sensing matrix $\mathbf{S}_t$ with the (smoothed) clutter subspace of the previous iteration $\hat{\mathbf{C}}'_{t-1}$ via exponential smoothing with factor $\alpha_t$.

In the example (2) the clutter components from the previous iteration are multiplied by their singular values $\hat{\mathbf{\Sigma}}'_{t-1}$, which can be regarded as a measure of how "strong" (here in the sense of how much energy they scatter back) the corresponding clutter components are. In principle, this scales the subspaces in $\hat{\mathbf{C}}'_{t-1}$, which are unit vectors, to their relevance/significance in previous measurements, allowing direct stacking (merging) with $\mathbf{S}_t$ in a unique matrix. The resulting (smoothed) clutter matrix $\mathbf{C}'_t$ is of dimension $(K_t + L_{t-1}) \times Q$, where $L_{t-1}$ is the number of clutter components in $\widehat{\mathbf{C}}'_{t-1}$ from the previous update. Typically, only a few clutter components are relevant, allowing $\mathbf{C}'_t$ to be handled with low complexity.

It should be appreciated that multiplying with the left singular vectors $\mathbf{U}'_{t-1}$ is not required and hence not performed. It would entail unnecessary computational overhead, since the relevance of each measurement contributing to the generation of the subspace is of no interest to the example of Fig. 3. Hence, the approach explained herein with the example of Fig. 3 requires only $\widehat{\mathbf{C}}'_{t-1}\widehat{\mathbf{\Sigma}}'_{t-1}$ from the previous update, which can be stored as a single $(Q \times L_{t-1})$ matrix. It is an exponential moving average of the previous clutter components, thus inherently incorporating the clutter information of previous measurements in a matrix with only a few columns. This is highly favorable compared to explicitly storing and re-accessing a large history of previous sensing measurements, and achieves the technical effect of tracking clutter components in a computationally efficient manner.

In the example illustrated by means of equation (1), it can be seen that in the initial step t = 0, there is obviously no previous clutter components (clutter subspace) to resort to such that the first clutter matrix corresponds to the scaled measurements as $\mathbf{C}'_0 = \sqrt{K_t Q}^{-1}\mathbf{S}_0$. The first clutter matrix, or more precisely $\mathbf{S}_0$, correspond to the clutter matrices described in the publication "CRAP: Clutter Removal with Acquisitions Under Phase Noise" and in the Finnish patent application number 20237037.

Then the second clutter components are determined based on the clutter matrix. In other words, meaningful clutter components should be extracted from $\mathbf{C}'_t$. Extracting/determining the meaningful clutter components facilitates to keep the computational complexity in check, and enables to avoid as much as possible that sensing targets, i.e. targets of interest, that might have been present during one or more sensing occurrences, and hence in one or more corresponding sets (acquisition) of measurement results of the sensing, thereby being added to the sensing matrix, are added to the second clutter components.

In the example of Fig. 3, the extracting starts by performing (block 309) a singular value decomposition, SVD, to the clutter matrix to obtain singular values of the clutter matrix. In the example of Fig. 3, the singular value decomposition is applied to the smoothed clutter matrix $\mathbf{C}'_t$ as

$$\mathbf{C}'_t = \mathbf{U}'_t \mathbf{\Sigma}'_t \mathbf{V}'^{\mathrm{H}}_t \qquad (3)$$

Then a decision threshold is determined (block 310) based on the singular values of the clutter matrix. For example, an upper bound for the singular values of the clutter matrix may be determined to be the decision threshold, for example using a first threshold implementation or a second threshold implementation, that will be described in more detail below, using eigenvalues as an example how to calculate singular value thresholds.

The first threshold implementation uses a Constant False Alarm Rate (CFAR) approach based on hypothesis testing. Here, the goal is to derive a threshold $\eta_{\mathrm{SV}}$ based on a probability of false alarm $p_{\mathrm{FA}}$ above which the singular values in $\mathbf{\Sigma}'_t$ are not considered to be generated by noise. All right singular vectors (rows of $\mathbf{V}'^{\mathrm{H}}_t$) corresponding to those singular values are then deemed meaningful/actual clutter components and form the new clutter subspace $\widehat{\mathbf{C}}'_t$.

To that end, in the first threshold implementation, the problem is framed as a binary decision whether an eigenvalue $x$ is due to a signal contribution, i.e. a reflection caused by a clutter component, or only due to noise. The eigenvalues are used here, as the distribution of the eigenvalues of the matrix $\overline{\mathbf{Y}_t} = \frac{1}{Q}\mathbf{S}_t\mathbf{S}^{\mathrm{H}}_t$ is known to approximately follow the Marchenko-Pastur (MP) distribution, if the entries of the sensing matrix $\mathbf{S}_t$ are standard complex Gaussian random variables with variance corresponding to the noise power $\sigma^2_N$. This knowledge can be leveraged for the threshold derivation. The singular value threshold can then be computed by taking the square root of the eigenvalue threshold, as the singular values of the sensing matrix $\mathbf{S}_t$ are equivalent to the square roots of the eigenvalues of $\mathbf{Y}_t$.

The solution for this signal detection problem can be obtained by applying the Neyman-Pearson criterion to the likelihood-ratio test

$$L(x) = \frac{f_X(x|H_1)}{f_X(x|H_0)} > \eta \qquad (4)$$

wherein $H_0$ is the null hypothesis, i.e., the eigenvalue is due to noise, and $H_1$ is the alternative hypothesis, i.e., the eigenvalue is due to a signal contribution, i.e. clutter contribution. Moreover, $\eta$ is the decision threshold (an eigenvalue threshold), which is chosen to maximize the probability of detecting the signal for a desired $p_{FA}$ based on the likelihood function of the null hypothesis $f_X(x|H_0)$.

To derive this threshold, the probability of a single eigenvalue exceeding $\eta$ can be written as

$$p_{FA,single} = P[X > \eta] = \int_\eta^\infty f_X(x|H_0)\, dx = 1 - F_X(\eta|H_0) \quad (5)$$

wherein $f_X(x|H_0)$ and $F_X(\eta|H_0)$ represent Probability Density Function (PDF) and Cumulative Distribution Function (CDF) of the random variable X assuming the null hypothesis.

The probability of false alarm $p_{FA}$, i.e., that none of the K eigenvalues exceeds $\eta$, is

$$\begin{aligned} p_{FA} &= 1 - \left(1 - p_{FA,single}\right)^K \\ &= 1 - \left[1 - \left(1 - F_X(\eta|H_0)\right)\right]^K \\ &= 1 - F_X(\eta|H_0)^K \qquad (6) \end{aligned}$$

which can be re-arranged as follows:

$$F_X(\eta|H_0) = \sqrt[K]{1 - p_{FA}} \qquad (7)$$

Solving for the threshold $\eta$ requires $F_X(\eta|H_0)$, i.e., the CDF of $X$ under the assumption that only noise is present. In this case, the current measurement matrix $\mathbf{S}_t$, which is stacked with the clutter components of the previous iteration, is a $K_t \times Q$ matrix, whose entries are standard complex Gaussian random variables with variance corresponding to the noise power $\sigma_N^2$. As mentioned earlier, the distribution of the eigenvalues of the matrix $\mathbf{Y}_t = \frac{1}{Q}\,\mathbf{S}_t\mathbf{S}_t^H$ is known to approximately follow the MP distribution, whose PDF and CDF can be expressed analytically. Thus, $F_X(\eta|H_0)$ is the CDF of the MP distribution, which can be plugged into equation (7) and yields to a following equation (8):

$$\frac{1}{2\pi\gamma\sigma_N^2}\left[\sqrt{\frac{\eta-a}{b-\eta}} + \frac{a+b}{2}\cdot\sin^{-1}\left(\frac{2\eta-a-b}{b-a}\right) - \sqrt{ab}\cdot\sin^{-1}\left(\frac{(a+b)\eta-2ab}{\eta(b-a)}\right)\right]$$
$$+\, 0.5 = \sqrt[K]{1 - p_{FA}} \qquad (8)$$

wherein:

- $\gamma = K_t/Q$, i.e., the ratio between the number of rows and the number of columns, which corresponds to the number of sets (acquisitions) and the number of samples per a set (acquisition), respectively,

- $a = \sigma_N^2(1 - \sqrt{\gamma})^2$ is a lower bound for the eigenvalues,

- $b = \sigma_N^2(1 + \sqrt{\gamma})^2$ is an upper bound for the eigenvalues.

In equation (8), all quantities except $\eta$ and $\sigma_N^2$ are known, and the latter can be roughly determined with measurements, leaving the threshold $\eta$ as the only left unknown.

However, solving equation (8) for $\eta$ corresponds to finding the inverse CDF of the MP distribution $F_X^{-1}(\eta|H_0)$, for which no analytical solution exists. As a workaround, one can determine $F_X(\eta|H_0)$ for a range of values between $a$ and $b$

to construct a lookup table, and then choose that $\eta$ that is closest to $\sqrt[K]{1 - p_{\text{FA}}}$.

It is important to note that this lookup table does not require a-priori knowledge of the noise power and can e.g., be constructed with unit noise power $\sigma_N^2 = 1$. The actual estimated (e.g., measured) noise power $\hat{\sigma}_N^2$ is then merely a scaling factor.

The final threshold for the singular values at update index t (dropped from the threshold for better readability) is computed by taking the square root of the eigenvalue threshold $\eta$ as

$$\eta_{\text{SV}} = \begin{cases} \sqrt{\dfrac{\hat{\sigma}_N^2 \cdot \eta}{K_t}} & t = 0 \\[3mm] \alpha_t \cdot \sqrt{\dfrac{\hat{\sigma}_N^2 \cdot \eta}{K_t}} & t > 0 \end{cases} \qquad (9)$$

the equation (9) including multiplication by $\sqrt{K_t}^{-1}$ as well as multiplication by the smoothing factor $\alpha_t$ discussed above with block 306, in addition to scaling with the estimated noise power $\hat{\sigma}_N^2$.

Still, as the equation (8) depends on $\gamma = K_t/Q$, different lookup tables may be pre-computed in case of varying numbers of acquisitions $K_t$.

Moreover, it should be noted that the MP PDF and CDF show some deviations w.r.t. the true (empirical) eigenvalue distribution at the tails. This also impacts the threshold derivation for $p_{\text{FA}} \to 0$, making it imprecise. However, it still serves as a good guess for when eigenvalues become significant with reasonable confidence.

In the second threshold implementation, the decision threshold may be simply determined based on the upper bound of the eigenvalues, i.e., as $\eta = b$. This approach does not give control about $p_{\text{FA}}$, but provides a simple way to compute a decision threshold above which eigenvalues can be considered significantly higher than noise, since it does not require sampling the CDF of the MP distribution as in the first threshold implementation. In the second threshold implementation, the final threshold $\eta_{\text{SV}}$ for the singular values may then also obtained with equation (9).

In numerical trials, with $K = 50$ and $Q = NM = 1584 \times 1120 = 1774080$, it has been found that the decision threshold $\eta = b$ corresponds to a false alarm rate of $p_{\text{FA}} \sim 0.03$. It should be noted that this also upper bounds the false alarm probability for which the decision threshold with the first threshold implementation can be determined.

It must be noted, however, that in practice several effects occur that impact the accuracy of the decision threshold. For example, contributions to the smoothed clutter matrix $\mathbf{C}_t'$ can typically not be perfectly separated into signal (clutter) and noise components due to leakages causing signal contributions (clutter contributions) to be spread over multiple singular values. Moreover, the noise power $\sigma_N^2$ can be subject to fluctuations and is generally hard to measure precisely.

To account for those uncertainties, in an implementation an upper bound for the singular values of the clutter matrix is multiplied by a predetermined threshold factor, and a result of the multiplication is determined to be the decision threshold. In other words, the initial $\eta_{\text{SV}}$ determined is multiplied by an additional scaling factor S. This has the further advantage that clutter components that are not present anymore will be removed from the clutter components (second clutter components) more quickly by falling under the threshold earlier.

When the decision threshold, denoted in Fig. 3 by "th", has been determined, the second clutter components are determined. In the example of Fig. 3, the right singular vectors in $\mathbf{V}_t'^{\text{H}}$ with corresponding singular values are used to determine the second clutter components. For the clarity of the description, the elements, i.e. in the example the singular vectors in the clutter matrix are processed one by one. However, it should be appreciated that they may be processed in parallel. In the example of Fig. 3, it is checked (block 311), whether all elements have been processed to determine whether an element is a second clutter component. If not (block 311: no), an element, meaning a singular vector, is taken (block 312) to be processed, and its singular value is compared (block 313) to the decision threshold th. **In** the illustrated example, if the value exceeds the decision threshold (block 313: yes), the element is determined (block 314) to be a second clutter component, and the process continues to block 311 to check, whether all elements have been processed. **In** the illustrated example, if the value does not exceed the decision threshold (block 313: no), the element is not a second clutter component, and the process continues to block 311 to check, whether all elements have been processed. **In** another implementation also an element whose value equals to the decision threshold is determined to be a second clutter component.

When all elements have been processed (block 311: yes), the second clutter components have been determined, and the previously determined clutter components of the environment may be updated (block 315) correspondingly to comprise the second clutter components, or elements based on the second clutter components. For example, the previously determined clutter components of the environment may be replaced by the second clutter components. In other words, in an implementation, the right singular vectors in $\mathbf{V}_t'^{\mathrm{H}}$ corresponding to the singular values exceeding the respective decision threshold $\eta_{\mathrm{SV}}$ form a new clutter subspace $\widehat{\mathbf{C}}_t'$, which comprises $L_t$ clutter components. For example, a new clutter matrix representation may be a matrix $\widehat{\mathbf{C}}_t'\widehat{\boldsymbol{\Sigma}}_t'$ that is stored for the next iteration (next update).

When the previously determined clutter components have been updated (block 315) using the second clutter components, the process returns to block 301 to monitor whether updating the clutter components is triggered.

The event that triggers the update may impact how the parameter values, for example values for the smoothing parameter $\alpha_t$, the time $\Delta K_t$ between acquisitions within a single sensing matrix $\mathbf{S}_t$, and the number of sets (acquisitions) $K_t$, are selected/determined.

For example, in case of a high a-priori confidence that the clutter components have changed significantly, it is beneficial to select for the smoothing factor $\alpha_t$ a high value to capture those effects by giving much weight to the new measurements. In similar fashion, an a-priori assessment of the likelihood of the scenario being target-free during the sensing could influence to the value of the smoothing factor $\alpha_t$. For example, in case of high confidence, a value for the smoothing factor $\alpha_t$ can also be selected to be high. On the other hand, if the confidence is low, less weight should also be given to the measurements by lowering the value of the smoothing factor $\alpha_t$ to reduce the probability of wrongly identifying a target of interest as a clutter component.

Similar reasoning applies also for $\Delta K_t$, which can be selected to be small if the empty scenario confidence is high. On the other hand, $\Delta K_t$ should be increased if the presence of a target of interest cannot be precluded a-priori. A higher $\Delta K_t$ typically allows to better "decorrelate" contributions of a (typically moving) target, making it less likely that such a target causes a strong singular value that will erroneously be added to the clutter components.

In environments with high noise/interference, the number of sets (acquisitions) $K_t$ should be selected to be high to still allow isolating the clutter components reliably. This parameter value must be selected carefully, however, as a higher value of $K_t$ comes along with a complexity increase due to the singular value decomposition.

The example procedure of Fig. 3 may be summarized to contain a creation of the clutter matrix and extraction of the most meaningful clutter components.

The creation of the clutter matrix $\mathbf{C}_t'$ is performed by stacking (merging) the previous clutter subspace $\widehat{\mathbf{C}}_{t-1}'$ (previous clutter components) with new sensing measurements $\mathbf{S}_t$, e.g., with exponential smoothing; scaling the previous clutter subspace $\widehat{\mathbf{C}}_{t-1}'$ (the singular vectors) according to their significance in the previous measurements by multiplying with their singular values $\widehat{\boldsymbol{\Sigma}}_{t-1}'$, which allows direct merging with $\mathbf{S}_t$, with proper weighting applied to the sensing measurements to preserve desired properties. This approach avoids the necessity of storing and processing all previous measurements at each update, which would be computationally infeasible.

The extraction of the most meaningful clutter components from the previously created clutter matrix $\mathbf{C}_t'$, which span the new clutter subspace $\widehat{\mathbf{C}}_t'$ is achieved by keeping only the meaningful clutter components by examining their singular values and comparing them to a determined decision threshold above which clutter components can be considered significant. Isolating and keeping only the significant components has the advantage that it allows storing only the updated clutter subspace $\widehat{\mathbf{C}}_t'$ (comprising only few clutter components) scaled by their singular values $\widehat{\boldsymbol{\Sigma}}_t'$, which can be stored as a single matrix and enables a computationally efficient solution.

Any of the above described processes can be applied to any radar-like sensing operation based on multi-dimensional matrices/tensors, enabling their use for a wide range of applications, including gNB/TRPs and UEs performing sensing operations in cellular/unlicensed systems. However, any of the processes can be implemented in other radar products, where acquiring and tracking clutter components is of interest.

The updated clutter components, for example the second clutter components, are used in clutter removal during sensing.

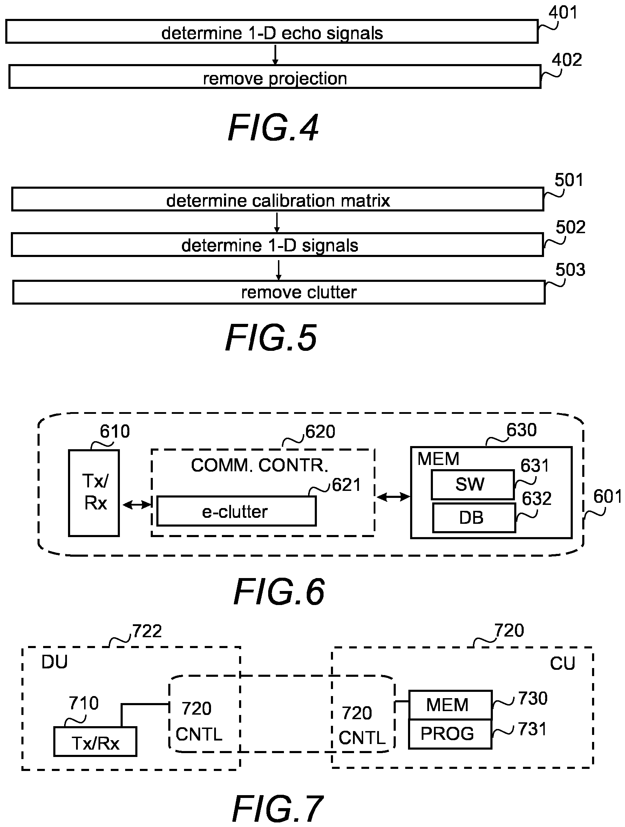

In the example illustrated in Fig. 4 the clutter removal is performed by determining (block 401) from echo signals received during sensing one-dimensional echo signals, in a similar way as discussed with block 202 above, and then performing the clutter removal by removing (block 402), per a one-dimensional echo signal, a projection of the one-dimensional echo signal over the second clutter components.

In the example illustrated in Fig. 5, the clutter removal starts by determining (block 501), using at least the second clutter components, at least one clutter calibration matrix. Then one-dimensional signals are determined (block 502), for example clutter contributing signals are determined based on the one-dimensional echo signals, by applying, per a one-dimensional echo signal, a projection of one of the at least one clutter calibration matrix to obtain a corresponding one-dimensional clutter contributing signal; and clutter is removed (block 503), for example from the multi-dimensional representations of echo signals using the one-dimensional clutter contributing signals. Details relating to clutter calibration matrix and clutter contributing signals are disclosed in the Finnish patent application number 20237037.

The blocks and related functions described above by means of Fig. 1 to Fig. 4 are in no absolute chronological order, and some of them may be performed simultaneously or in an order differing from the given one. Other functions can also be executed between them or within them, and other information may be transmitted, and/or other rules applied. For example, when beam sweeping is used for the sensing signals, the functions may be performed per a beam. Some of the blocks or part of the blocks or one or more pieces of information can also be left out or replaced by a corresponding block or part of the block or one or more pieces of information. Furthermore, some of the blocks in one example may be combined with another example.

The blocks, related functions, and information acquisitions described above by means of Fig. 1 to Fig. 5 are in no absolute chronological order, and some of them may be performed simultaneously or in an order differing from the given one. Other functions can also be executed between them or within them, and other information may be sent, and/or other rules applied. For example, the accuracy may be validated using more than one test round during which reference signals are transmitted to obtain unused input to the beam prediction model. Some of the blocks or part of the blocks or one or more pieces of information can also be left out or replaced by a corresponding block or part of the block or one or more pieces of information.

Fig. 6 illustrates an apparatus 601, that may be configured at least to determine second clutter components according to some embodiments. Fig. 7 illustrates an apparatus that may implement distributed functionality of the apparatus illustrated in Fig. 6.

According to an embodiment, there is provided an apparatus comprising at least means for obtaining sets of measurement results of sensing of an environment of which clutter components have been determined; means for transforming, per a set, multi-dimensional representations of echo signals received as measurement results of the set at least partly into one-dimensional echo signals; and means for determining second clutter components based at least on corresponding one-dimensional echo signals and a clutter matrix representation that comprises elements obtained from previously determined clutter components of the environment The apparatus 601 may comprise one or more communication control circuitry 620, such as at least one processor, and at least one memory 630, including one or more algorithms 631, such as a computer program code (software) wherein the at least one memory and the computer program code (software) are configured, with the at least one processor, to cause the apparatus to carry out any one of the exemplified functionalities of a corresponding apparatus, described above with any of Fig. 1 to Fig. 5. Said at least one memory 630 may also comprise at least one database 632.

Referring to Fig. 6, the one or more communication control circuitries 620 of the apparatus 601 comprise at least an enhanced clutter (e-clutter) circuitry 621 which is at least configured to perform updating previously determined clutter components of an environment. To this end, the enhanced clutter circuitry 621 of the apparatus 601 is configured to carry out at least some of the functionalities described above, e.g., by means of Fig. 1 to Fig. 5, using one or more individual circuitries.

Referring to Fig. 6, the memory 630 may be implemented using any suitable data storage technology, such as semiconductor based memory devices, flash memory, magnetic memory devices and systems, optical memory devices and systems, fixed memory and removable memory.

Referring to Fig. 6, the apparatus 601 may further comprise different interfaces 610 such as one or more communication interfaces (TX/RX) comprising hardware and/or software for realizing communication connectivity according to one or more communication protocols and/or for realizing sensing, for example joint communication and sensing. The one or more communication interfaces 610 may enable connecting to the Internet and/or to a core network of a wireless communications network and/or to a radio access network and/or to other apparatuses within range of the apparatus. The one or more communication interface 610 may provide the apparatus with communication capabilities to sense and/or transmit sensing signals, and possibly to communicate in a cellular communication system and enable communication to second apparatuses, such as different network nodes or elements or device components, e.g., mobile apparatuses, such as terminal devices or user equipments, for example. The one or more communication interfaces 610 may comprise standard well-known components such as an amplifier, filter, frequency-converter, (de)modulator, and encoder/decoder circuitries, controlled by the corresponding controlling units, and possibly one or more antennas.

In an embodiment, as shown in Fig. 7, at least some of the functionalities of the apparatus of Fig. 6 may be shared between two physically separate devices, forming one operational entity. Therefore, the apparatus may be seen to depict the operational entity comprising one or more physically separate devices for executing at least some of the described processes. Thus, the apparatus of Fig. 7, utilizing such shared architecture, may comprise a control unit CU 720, or a remote control unit, such as a host computer or a server computer, operatively coupled (e.g. via a wireless or wired connection) to a remote distributed unit DU 722 located in the first apparatus or in a remote head of the first apparatus. In an embodiment, at least some of the described processes may be performed by the CU 720. In an embodiment, the execution of at least some of the described processes may be shared among the DU 722 and the CU 720.

Similar to Fig. 6, the apparatus of Fig. 7 may comprise one or more communication control circuitries (CNTL) 720, such as at least one processor, and at least one memory (MEM) 730, including one or more algorithms (PROG) 731, such as a computer program code (software) wherein the at least one memory and the computer program code (software) are configured, with the at least one processor, to cause the apparatus to carry out any one of the exemplified functionalities of the first apparatus, described above, e.g., by means of Fig. 1 to Fig. 5.

In embodiments, the CU 720 may generate a virtual network through which the CU 720 communicates with the DU 722. In general, virtual networking may involve a process of combining hardware and software network resources and network functionality into a single, software-based administrative entity, a virtual network. Network virtualization may involve platform virtualization, often combined with resource virtualization. Network virtualization may be categorized as external virtual networking which combines many networks, or parts of networks, into the server computer or the host computer (e.g. to the CU). External network virtualization is targeted to optimized network sharing. Another category is internal virtual networking which provides network-like functionality to the software containers on a single system. Virtual networking may also be used for testing the terminal device.

In embodiments, the virtual network may provide flexible distribution of operations between the DU and the CU. In practice, any digital signal processing task may be performed in either the DU or the CU and the boundary where the responsibility is shifted between the DU and the CU may be selected according to implementation.

According to an embodiment, there is a system that comprises at least one or more apparatuses configured to transmit sensing signals, for example for obtaining sensing results to update clutter components, and/or for sensing purposes, one or more apparatuses that are configured to remove clutter, and one or more apparatuses configured to update the clutter components.

As used in this application, the term 'circuitry' may refer to one or more or all of the following: (a) hardware-only circuit implementations, such as implementations in only analog and/or digital circuitry, and (b) combinations of hardware circuits and software (and/or firmware), such as (as applicable): (i) a combination of analog and/or digital hardware circuit(s) with software/firmware and (ii) any portions of hardware processor(s) with software, including digital signal processor(s), software, and memory(ies) that work together to cause an apparatus, such as a terminal device or an access node, to perform various functions, and (c) hardware circuit(s) and processor(s), such as a microprocessor(s) or a portion of a microprocessor(s), that requires software (e.g. firmware) for operation, but the software may not be present when it is not needed for operation. This definition of 'circuitry' applies to all uses of this term in this application, including any claims. As a further example, as used in this application, the term 'circuitry' also covers an implementation of merely a hardware circuit or processor (or multiple processors) or a portion of a hardware circuit or processor and its (or their) accompanying software and/or firmware. The term 'circuitry' also covers, for example and if applicable to the particular claim element, a baseband integrated circuit for an access node or a terminal device or other computing or network device.

In an embodiment, at least some of the processes described in connection with Fig. 1 to Fig. 5 may be carried out by an apparatus comprising corresponding means for carrying out at least some of the described processes. Some example means for carrying out the processes may include at least one of the following: detector, processor (including dual-core and multiple-core processors), digital signal processor, controller, receiver, transmitter, encoder, decoder, memory, RAM, ROM, software, firmware, display, user interface, display circuitry, user interface circuitry, user interface software, display software, circuit, antenna, antenna circuitry, and circuitry. In an embodiment, the at least one processor, the memory, and the computer program code form processing means or comprises one or more computer program code portions for carrying out one or more operations according to any one of the embodiments of Fig. 1 to Fig. 5 or operations thereof.

Embodiments and examples as described may also be carried out in the form of a computer process defined by a computer program or portions thereof. Embodiments of the functionalities described in connection with Fig. 1 to Fig. 5 may be carried out by executing at least one portion of a computer program comprising corresponding instructions. The computer program may be provided as a computer readable medium comprising program instructions stored thereon or as a non-transitory computer readable medium comprising program instructions stored thereon. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example. The computer program medium may be a non-transitory medium. The term "non-transitory," as used herein, is a limitation of the medium itself (i.e., tangible, not a signal) as opposed to a limitation on data storage persistency (e.g., RAM vs. ROM). Coding of software for carrying out the embodiments as shown and described is well within the scope of a person of ordinary skill in the art.

Even though the embodiments have been described above with reference to examples according to the accompanying drawings, it is clear that the embodiments are not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways within the scope of independent claims. Further, it is clear to a person skilled in the art that the described embodiments may, but are not required to, be combined with other embodiments in various ways within the scope of independent claims.

**Claims**

1. An apparatus comprising means for:

   obtaining sets of measurement results of sensing of an environment of which clutter components have been determined;
   transforming, per a set, multi-dimensional representations of echo signals received as measurement results of the set at least partly into one-dimensional echo signals; and
   determining second clutter components based at least on corresponding one-dimensional echo signals and a clutter matrix representation that comprises elements obtained from previously determined clutter components of the environment.

2. The apparatus of claim 1, wherein the elements in the clutter matrix representation are results of a multiplication of the previously determined clutter components of the environment with their singular values.

3. The apparatus of claim 1 or 2, further comprising means for:
   updating the previously determined clutter components of the environment to comprise the second clutter components.

4. The apparatus of any preceding claim, further comprising means for determining the second clutter components by

   stacking the one-dimensional echo signals of the sets to form a sensing matrix;
   stacking the sensing matrix with the clutter matrix representation to form a clutter matrix; and
   determining the second clutter components based on the clutter matrix.

5. The apparatus of claim 4, further comprising means for:

   multiplying, prior to stacking the sensing matrix with the clutter matrix representation, the sensing matrix with a scaling factor; and
   using a result of the multiplication in the stacking.

6. The apparatus of claim 4 or 5, further comprising means for:

   determining, prior to stacking, a first smoothing value whose value is at most one and not less than zero and a second smoothing value whose value is at most one and not less than zero, wherein when one of the smoothing values is zero, the other one is one;
   multiplying the sensing matrix with the first smoothing value and the clutter matrix representation with the second smoothing value; and
   using results of the multiplication in the stacking.

7. The apparatus of claim 4, 5 or 6, further comprising means for performing a singular value decomposition to the clutter matrix to obtain singular values of the clutter matrix.

8. The apparatus of claim 7, further comprising means for determining the second clutter components by:

   determining a decision threshold based on the singular values of the clutter matrix; and
   determining that at least an element whose value exceeds the decision threshold is a second clutter component.

9. The apparatus of claim 8, further comprising means for:
   determining an upper bound for the singular values of the clutter matrix to be the decision threshold.

10. The apparatus of claim 8, further comprising means for:

multiplying an upper bound for the singular values of the clutter matrix by a predetermined threshold factor; and
determining a result of the multiplication to be the decision threshold.

11. The apparatus of any preceding claim, further comprising means for:
determining the second clutter components periodically and/or when an event indicating a request for the second clutter components is detected.

12. The apparatus of any preceding claim, further comprising means for:
performing clutter removal by removing, per a one-dimensional echo signal, a projection of the one-dimensional echo signal over the second clutter components.

13. The apparatus of any preceding claim 1 to 11, further comprising means for:

determining, using at least the second clutter components, at least one clutter calibration matrix;
determining one-dimensional clutter contributing signals based on the one-dimensional echo signals, by applying, per a one-dimensional echo signal, a projection of one of the at least one clutter calibration matrix to obtain a corresponding one-dimensional clutter contributing signal; and
removing clutter from the multi-dimensional representations of echo signals using the one-dimensional clutter contributing signals.

14. A method for an apparatus, the method comprising at least:

obtaining sets of measurement results of sensing of an environment of which clutter components have been determined;
transforming, per a set, multi-dimensional representations of echo signals received as measurement results of the set at least partly into one-dimensional echo signals; and
determining second clutter components based at least on corresponding one-dimensional echo signals and a clutter matrix representation that comprises elements obtained from previously determined clutter components of the environment.

15. A computer readable medium comprising instructions which, when executed by an apparatus, cause the apparatus to perform at least:

obtaining sets of measurement results of sensing of an environment of which clutter components have been determined;
transforming, per a set, multi-dimensional representations of echo signals received as measurement results of the set at least partly into one-dimensional echo signals; and
determining second clutter components based at least on corresponding one-dimensional echo signals and a clutter matrix representation that comprises elements obtained from previously determined clutter components of the environment.

*FIG.1*

*FIG.2*

**FIG.3**

determine 1-D echo signals — 401

↓

remove projection — 402

*FIG.4*

determine calibration matrix — 501

↓

determine 1-D signals — 502

↓

remove clutter — 503

*FIG.5*

*FIG.6*

*FIG.7*

**EUROPEAN SEARCH REPORT**

Application Number

EP 25 15 2442

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 115 412 413 A (UNIV NANJING INFORMATION SCIENCE & TECH) 29 November 2022 (2022-11-29) * abstract * * paragraphs [0005] - [0008], [0037] - [0044]; figure 1 * | 1-15 | INV. G01S7/40 G01S13/00 G01S7/41 |
| A,D | Henninger Marcus ET AL: "CRAP: Clutter Removal with Acquisitions Under Phase Noise", arXiv, 1 June 2023 (2023-06-01), pages 1-8, XP093133021, Retrieved from the Internet: URL:https://arxiv.org/abs/2306.00598 [retrieved on 2024-02-20] * abstract * * paragraphs [00II], [0III] * | 1-15 | |
| A | KIM JI-EUN ET AL: "Robust Detection of Presence of Individuals in an Indoor Environment Using IR-UWB Radar", IEEE ACCESS, IEEE, USA, vol. 8, 6 June 2020 (2020-06-06), pages 108133-108147, XP011793830, DOI: 10.1109/ACCESS.2020.3000796 [retrieved on 2020-06-17] * abstract * * page 108134, paragraph II - page 108142, paragraph II * | 1-15 | TECHNICAL FIELDS SEARCHED (IPC)<br><br>G01S |
| A | KR 102 279 746 B1 (POSTECH RES & BUSINESS DEV FOUND [KR]) 21 July 2021 (2021-07-21) * abstract * * paragraph [0008] - paragraph [0119] * | 1-15 | |

The present search report has been drawn up for all claims

| Place of search | Date of completion of the search | Examiner |
|---|---|---|
| Munich | 27 May 2025 | van Norel, Jan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 2442

This annex lists the patent family members relating to the patent documents cited in the above-mentioned European search report.
The members are as contained in the European Patent Office EDP file on
The European Patent Office is in no way liable for these particulars which are merely given for the purpose of information.

27-05-2025

| Patent document cited in search report | | Publication date | Patent family member(s) | Publication date |
|---|---|---|---|---|
| CN 115412413 | A | 29-11-2022 | NONE | |
| KR 102279746 | B1 | 21-07-2021 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 20237037 A

**Non-patent literature cited in the description**

- **M. HENNINGER** ; **S. MANDELLI** ; **A. GRUDNITSKY** ; **T. WILD** ; **S. TEN BRINK**. *CRAP: Clutter Removal with Acquisitions Under Phase Noise*, June 2023